(19) Europäisches Patentamt
European Patent Office
Office européen des brevets

(11) Publication number: **0 341 952 A2**

(12) **EUROPEAN PATENT APPLICATION**

(21) Application number: **89304625.0**

(51) Int. Cl.4: **B01D 19/04**

(22) Date of filing: **08.05.89**

(30) Priority: **09.05.88 US 192042**

(43) Date of publication of application: **15.11.89 Bulletin 89/46**

(84) Designated Contracting States: **DE FR GB IT SE**

(71) Applicant: **DOW CORNING CORPORATION**
**3901 S. Saginaw Road**
**Midland Michigan 48686-0995(US)**

(72) Inventor: **McGee, James Bradshaw**
**2697 W. Olson Road**
**Sanford Michigan(US)**
Inventor: **Petroff, Lenin James**
**3071 Shillair**
**Bay City Michigan(US)**

(74) Representative: **Lewin, John Harvey et al**
**ELKINGTON AND FIFE Beacon House 113**
**Kingsway**
**London WC2B 6PP(GB)**

(54) **Silicone foam control composition.**

(57) There is disclosed a foam control composition comprising (I) a silicone defoamer reaction product and (II) a silicone glycol copolymer, which composition is particularly effective in defoaming highly acidic or highly basic aqueous systems. Component (I) is prepared by heating a mixture of (i) a polyorganosiloxane fluid, (ii) a resinous silicon compound, (iii) a finely divided filler and (iv) a catalytic amount of a compound for promoting the reaction of the other components at a temperature of 50° C. to 300° C.

EP 0 341 952 A2

Xerox Copy Centre

## SILICONE FOAM CONTROL COMPOSITION

This invention relates to a foam control composition for use in aqueous foaming systems. More particularly, this invention relates to a composition comprising a silicone defoamer reaction product and a silicone glycol which is especially useful in controlling foam in highly acidic or highly basic systems operating at elevated temperatures.

The use of various silicone containing compositions as antifoams or defoamers is known. In this regard, it is well established that this art is highly unpredictable and slight modification can greatly alter performance of such compositions. Most of these compositions contain silicone fluid (usually dimethylpolysiloxane), often in combination with small amounts of silica filler. Additionally, these compositions may include various surfactants and dispersing agents in order to impart improved foam control or stability properties to the compositions.

Thus, for example, Rosen, in United States Patent No. 4,076,648, teaches self-dispersible antifoam compositions consisting essentially of a lipophilic nonionic surface active agent homogeneously dispersed in a non-emulsified diorganopolysiloxane antifoam agent. This combination is said to promote dispersibility in water without the need for emulsification.

Kulkarni et al., in United States Patent No. 4,395,352, improved upon the compositions disclosed by Rosen, cited supra, by limiting the viscosity of the dimethylpolysiloxane oil therein to the range of 5,000 to 30,000 cS at 25° C. Such a limitation, it is taught, unexpectedly resulted in improved efficiency in difficult to defoam aqueous systems, such as those which contain high concentrations of ionic surfactants and those which are very viscous.

More recently, Aizawa et al., in United States Patent No. 4,639,489 teach a method for producing a silicone defoamer composition wherein a complex mixture of polyorganosiloxanes, filler, a resinous siloxane and a catalyst to promote reaction of the other components are heated together at 50° C. to 300° C.

It has now been found that antifoam compositions disclosed by Aizawa et al., cited supra, can be advantageously utilized in such acidic or basic aqueous foaming systems at elevated temperatures when these compositions are combined with particular silicone glycols. When the foam control compositions of the present invention are used, aqueous media having a pH as low as 1 or as high as 14 and a temperature as high as 100° C. are defoamed for longer time periods than when antifoams of the prior art are employed.

This invention thus relates to a foam control composition comprising:

(I) a silicone defoamer reaction product prepared by reacting at a temperature of 50° C. to 300° C.:

(i) 100 parts by weight of at least one polyorganosiloxane selected from the group consisting of

(A) a polyorganosiloxane having a viscosity of about 20 to 100,000 cS at 25° C. and being expressed by the general formula $R^1{}_aSiO_{(4-a)/2}$ in which $R^1$ is a monovalent hydrocarbon or halogenated hydrocarbon group having 1 to 10 carbon atoms and a has an average value of 1.9 to 2.2 and

(B) a polyorganosiloxane having a viscosity of 200 to about 100 million cS at 25° C. expressed by the general formula $R^2{}_b(R^3O)_cSiO_{(4-b-c)/2}$ in which $R^2$ is a monovalent hydrocarbon or halogenated hydrocarbon group having 1 to 10 carbon atoms, $R^3$ is hydrogen or a monovalent hydrocarbon group having 1 to 10 carbon atoms, b has an average value of 1.9 to 2.2 and c has a sufficiently large value to give at least one $-OR^3$ group in each molecule, said $-OR^3$ group being present at least at the end of a molecular chain;

(ii) 0.5 to 20 parts by weight of at least one resinous silicon compound selected from the group consisting of

(a) an organosilicon compound of the general formula $R^4{}_dSiX_{4-d}$ in which $R^4$ is a monovalent hydrocarbon group having 1 to 5 carbon atoms, X is a hydrolyzable group and d has an average value of one or less,

(b) a partially hydrolyzed condensate of said compound (a),

(c) a siloxane resin consisting essentially of $(CH_3)_3SiO_{1/2}$ units and $SiO_{4/2}$ units wherein the ratio of $(CH_3)_3SiO_{1/2}$ units to $SiO_{4/2}$ units is 0.4:1 to 1.2:1, and

(d) a condensate of said compound (c) with said compound (a) or (b);

(iii) 0.5 to 30 parts by weight of a finely divided filler;

(iv) a catalytic amount of a compound for promoting the reaction of the other components; and

(II) from about 20 to 200 parts by weight for each 100 parts by weight of said silicone defoamer reaction product (I) of a silicone-glycol copolymer having the average general formula

$$QR^1{}_2SiO(R^1\underset{\substack{|\\G}}{S}iO)_j(R^1{}_2SiO)_kSiR^1{}_2Q$$

wherein $R^1$ has been previously defined, Q is $R^1$ or G, j has a value of 1 to 20, k has a value of 0 to 200 and G is a polyoxyalkylene group having the average structure

$$-R(OCH_2CH_2)_m(OCH_2\underset{\displaystyle CH_3}{\underset{|}{C}H})_nOZ$$

in which R is a divalent hydrocarbon group having 2 to 20 carbon atoms, m has a value of about 2 to 50, n has a value of 0 to about 50 and Z is selected from the group consisting of hydrogen, an alkyl radical having 1 to 6 carbon atoms and an acyl group having 2 to 6 carbon atoms, said silicone glycol being dispersible in water.

The present invention further relates to a process for controlling foam in an aqueous foaming system which includes the addition of a foam control agent to said system, the improvement comprising using the above described composition as the foam control agent.

The compositions of this invention comprise (I) a silicone defoamer reaction product prepared according to the disclosures of Aizawa et al., cited supra, and from about 20 to 200 parts by weight of (II) a silicone glycol for each 100 parts by weight of (I).

Component (I) of the present invention is a reaction product of (i) a polyorganosiloxane, (ii) a resinous silicon compound, (iii) a finely divided filler and (iv) a catalytic amount of a compound for promoting the reaction of the other components.

Component (i) may be selected from (A) polyorganosiloxanes expressed by the general formula $R^1_aSiO_{(4-a)/2}$ and having a viscosity of 20 to 100,000 centistokes (cS) at 25° C. The organo groups $R^1$ of the polyorganosiloxane (A) are the same or different monovalent hydrocarbon or halogenated hydrocarbon groups having one to ten carbon atoms. Specific examples thereof are well known in the silicone industry and include methyl, ethyl, propyl, butyl, octyl, trifluoropropyl, phenyl, 2-phenylethyl and vinyl groups. The methyl group is particularly preferred. In the above formula, a has a value of 1.9 to 2.2. It is particularly preferred that polyorganosiloxane (A) is a trimethylsilyl-terminated polydimethylsiloxane having a viscosity of about 350 to 15,000 cS at 25° C.

Alternatively, component (i) may be selected from (B) polyorganosiloxanes expressed by the general formula $R^2_b(R^3O)_cSiO_{(4-b-c)/2}$ and having a viscosity of 200 to 100 million centistokes at 25° C. wherein $R^2$ is independently selected from the monovalent hydrocarbon or halogenated hydrocarbon groups designated for group $R^1$, $R^3$ is a hydrogen atom or $R^2$ and the $-OR^3$ group is present at least at the end of a molecular chain of polyorganosiloxane. The value of b is between 1.9 to 2.2 and c is has a value so as to provide at least one $-OR^3$ group per molecule. It is particularly preferred that polyorganosiloxane (B) is a trimethylsilyl-terminated polydimethylsiloxane having a viscosity of about 1,000 to 50,000 cS at 25° C. Component (i) may also be a mixture of (A) and (B) in any proportion.

Component (ii) is at least one resinous silicon compound selected from (a) to (d):

(a) An organosilicon compound of the general formula $R^4_dSiX_{4-d}$ wherein $R^4$ is a monovalent hydrocarbon group having one to five carbon atoms, X is a hydrolyzable group, such as $-OR^5$ or $-OR^6OR^7$, in which $R^6$ is a divalent hydrocarbon group having one to five carbon atoms and $R^5$ and $R^7$ are each hydrogen or a monovalent hydrocarbon group having one to five carbon atoms. The average value of d does not exceed 1.

(b) A partially hydrolyzed condensate of the compound (a),

(c) A siloxane resin consisting essentially of $(CH_3)_3SiO_{1/2}$ and $SiO_2$ units and having a $(CH_3)_3SiO_{1/2}/SiO_2$ ratio of 0.4/1 to 1.2/1.

(d) A condensate of the siloxane resin (c) with the compound (a) or (b).

It is preferred that component (ii) is selected from either an alkyl polysilicate wherein the alkyl group has one to five carbon atoms, such as methyl polysilicate, ethyl polysilicate and propyl polysilicate, or the siloxane resin (c). Most preferably, component (ii) is either ethyl polysilicate or a siloxane resin copolymer consisting essentially of $(CH_3)_3SiO_{1/2}$ units and $SiO_2$ units in a molar ratio of approximately 0.75:1.

Component (iii) is a finely divided filler such as fume $TiO_2$, $Al_2O_3$, $Al_2O_3/SiO_2$, $ZrO_2/SiO_2$ and $SiO_2$. Various grades of silica having a particle size of several millimicrons to several microns and a specific surface area of about 50 to 1000 $m^2/g$ are commercially available an suitable for use as component (iii). Preferably, the filler is selected from hydrophobic silicas having a surface area of about 50 to 300 $m^2/g$.

Component (iv) is a compound used as a catalyst for promoting the reaction of the other components. It is preferably selected from siloxane equilibration and/or silanol-condensing catalysts such as alkali metal hydroxides, alkali metal silanolates, alkali metal alkoxides, quaternary ammonium hydroxides and silanolates, quaternary phosphonium hydroxides and silanolates and metal salts of organic acids. It is preferred that the catalyst is potassium silanolate.

For the purposes of the present invention, the silicone defoamer reaction product (I) may optionally contain component (v), a polyorganosiloxane expressed by the general formula $R^8_e(R^9O)_fSiO_{(4-e-f)/2}$ and having a viscosity of 5 to 200 cS at 25°C. wherein $R^8$ is a monovalent hydrocarbon or halogenated hydrocarbon group having one to ten carbon atoms and $R^9$ is hydrogen or a monovalent hydrocarbon group having one to ten carbon atoms. The value of e is between 1.9 and 2.2 and f has a value so as to provide two or more $-OR^9$ groups in each molecule. It is particularly preferred that component (v) is a hydroxyl-terminated polydimethylsiloxane having a viscosity of about 10 to 50 cS at 25°C.

A mixture of components (i) to (iv), optionally containing component (v), is reacted under heat to produce the silicone defoamer reaction product (I), the proportions of the various components being:

| | |
|---|---|
| Component (i) | - 100 parts by weight; |
| Component (ii) | - 0.5 to 20, preferably 1 to 7, parts by weight; |
| Component (iii) | - 0.5 to 30, preferably 1 to 7, parts by weight; |
| Component (iv) | - A catalytic amount (usually in the range of 0.03 to 1 part by weight; |
| Component (v) | - 0 to 20, preferably 1 to 10, parts by weight. |

The proportions of components (A) and (B) used depends largely on their respective viscosities. It is preferable to use a mixture of (A) and (B) which has a viscosity of 1,000 to 100,000 cS at 25°C.

The silicone defoamer reaction product (I) is prepared by first mixing components (i) and (ii) and heating this blend to about 110 to 120°C. and then adding catalyst (iv). Finely divided filler (iii) is then uniformly mixed in using an appropriate dispersing device, such as a homomixer, colloid mill or triple roll mill. The resulting mixture is heated at a temperature of 50°C. to 300°C., preferably 100°C. to 300°C., and reacted for one to eight hours, although the reaction time varies depending on the temperature. If component (v) is to be employed in the composition, it is generally added after the filler (iii). It is preferable to carry out all mixing and heating operations in an inert gas atmosphere in order to avoid any danger and to remove volatile matter (unreacted matter, by-products, etc.). The mixing order of the components and the heating temperature and time as hereinabove stated are not critical but can be changed as required. It is further preferred that, after reaction, the catalyst is neutralized to further stabilize the silicone defoamer reaction product (I).

Component (II) of the present invention is a silicone glycol having the average general formula

$$QR^1_2SiO(R^1\underset{\underset{G}{|}}{S}iO)_j(R^1_2SiO)_kSiR^1_2Q$$

wherein $R^1$ has been previously defined, Q is $R^1$ or G, j has a value of 1 to 20, and k has a value of 0 to 200. In the above formula, G is a polyoxyalkylene group having the average structure

$$-R(OCH_2CH_2)_m(O\underset{\underset{CH_3}{|}}{CH_2CH})_nOZ$$

in which R is a divalent hydrocarbon group having 2 to 20 carbon atoms, m has a value of about 2 to 50 and Z is selected from the group consisting of hydrogen, an alkyl radical having 1 to 6 carbon atoms and an acyl group having 2 to 6 carbon atoms. For the purposes of the present invention, n is zero or has a value, such as 1 to 50. Preferably, n has some small finite value in order to qualify the resulting foam control compositions for use in indirect food contact antifoam applications. The selection of the parameters j, k, m and n is made with the proviso that the silicone glycol (II) must be water dispersible (i.e., the silicone glycol does not phase separate on standing after being thoroughly mixed with water). Thus, for example, when the value of j is at least 10% of the value of k, the silicone glycol is generally dispersible in water. With this proviso in mind, it is preferred that both Q and $R^1$ of component (II) are methyl radicals and that R is the trimethylene group. It is further preferred that j is between 1 and 10, k is between 0 and 100 and m is between 7 and 12. Although somewhat inferior in performance, solid compositions of the present invention

may be formed when m is sufficiently large (e.g., m = 24).

The silicone glycols (II) are well known in the art, many of these being available commercially, and further description thereof is considered unnecessary.

The compositions of the present invention preferably also contain (III) a finely divided filler, as described above for component (iii). Addition of such a filler has been found to impart an increased measure of stability to the compositions since compositions consisting of only Components (I) and (II) tend to phase separate on standing at ambient conditions even though these compositions do provide enhanced antifoam performance. Specific examples of this filler include zirconium silica hydrogels (co-precipitated zirconium and silica) and hydrophobic precipitated silica, the latter being highly preferred.

The compositions of the present invention may further optionally contain (IV) a polyorganosiloxane of the type described for component (i), supra. Addition of this ingredient also confers added stability with respect to phase separation of components (I) and (II). Preferred polyorganosiloxanes in this regard are selected from the same trimethylsilyl-terminated polydimethylsiloxanes described for the preferred embodiments for (A) and (B) of component (i), supra. In this case, the preferred viscosity ranges of (A) and (B) are 2 to 100 cS and 150 to 100,000 cS, respectively. Particularly preferred viscosity ranges of these components are 10 to 50 cS for (A) and 500 to 2,000 cS for (B), the above viscosities being measured at 25°C.

In addition to the above mentioned components, the foam control agents of the present invention may also contain adjuvants such as corrosion inhibitors and dyes.

The foam control agents of the present invention may be prepared by thoroughly mixing 100 parts by weight of the silicone defoamer reaction product (I) with 20 to 200 parts by weight, preferably about 100 parts, of the silicone glycol (II). Preferably, from 1 to 15 parts by weight of the finely divided filler (III) is also uniformly dispersed in the above mixture of components (I) and (II). This may be accomplished by any convenient mixing method known in the art such as a sigma blade mixer, planetary mixer or other suitable mixer. Although the order of mixing is not considered critical, it is preferred to first mix components (I) and (II) and then disperse the finely divided filler (III) in this combination by using a high shear mixer. If the optional polyorganosiloxane (IV) is to be included in the composition, it is generally added at a level of about 10 to 100 parts by weight.

The present invention also relates to a process for controlling foam in an aqueous foaming system wherein the above-described foam control agents may simply be added to an acidic or basic aqueous foaming (or foam-producing) system. Typically, the foam control agents of the present invention are added at a concentration of about 0.001 to 0.1 percent based on the weight of the foaming system, however, the skilled artisan will readily determine optimum concentrations after a few routine experiments. The method of addition is not critical and the foam control agent may be metered in or added by any of the techniques known in the art.

It has been found that the foam control agents of the present invention offer particular advantage when the foaming system comprises highly acid or highly basic aqueous environments, such as those having a pH of less than about 3 or greater than about 12. This holds particularly for highly acidic or basic systems at elevated temperatures. Thus, for example, under the extremely harsh conditions encountered in paper pulp manufacture, wherein the aqueous foaming medium (kraft process "black liquor") has a pH of 13 to 14 and a temperature of 50°C. to 100°C., the compositions of the present invention have been found to provide defoaming activity for considerably greater time periods than antifoam agents of the prior art (e.g., those disclosed by Kulkarni et al. or those of Aizawa et al., both cited supra).

The following examples are presented to further illustrate the compositions of this invention but are not to be construed as limiting the invention, which is delineated in the appended claims. All parts and percentages in the examples are on a weight basis unless indicated to the contrary.

The following materials were employed in the preparation of the antifoam compositions:

FLUID A

A silicone defoamer reaction product prepared according to Example 1 of United States Patent No. 4,639,489 to Aizawa et al., cited supra. This antifoam contained 60 parts of a trimethylsilyl-terminated polydimethylsiloxane having a viscosity of 1,000 cS at 25°C.; 29 parts of a hydroxyl-terminated polydimethylsiloxane having a viscosity of 12,500 cs at 25°C.; 2.9 parts of ethyl polysilicate ("Silicate 45" of Tama Kagaku Kogyo Co., Ltd., Japan); 4.8 parts of a potassium silanolate catalyst; 2.9 parts of Aerogel #200 silica (Nippon Aerogel Co., Japan) having a surface area of 200 $m^2/g$; and 4.8 parts of hydroxyl-terminated polydimethylsiloxane having a viscosity of 40 cS at 25°C. In addition to the above ingredients,

this formulation also included 0.3 parts of ethanol as part of the catalyst, 0.1 part water adsorbed on the silica and 0.1 part of L-540, added as a process dispersant. L-540 (Union Carbide Corp., Danbury, CT) is described as a silicone glycol block copolymer wherein the glycol blocks consist of 50/50 mole percent of polyoxyethylene/polyoxypropylene.

FLUIDS B to G

Silicone glycols having the average structure

$$Me_3SiO(\overset{\displaystyle Me}{\underset{\displaystyle CH_2CH_2CH_2(OCH_2CH_2)_mOZ}{Si}})_j(Me_2SiO)_kSiMe_3$$

wherein Me hereinafter denotes a methyl radical and Z, j, k and m are defined in the following table

| Ingredient | HLB Value | Z | j | k | m |
|---|---|---|---|---|---|
| FLUID B | 14 | -H | 1 | 0 | 12 |
| FLUID C | 7 | -C(O)Me | 1 | 24 | 12 |
| FLUID D | -- | -H | 1 | 0 | 7 |
| FLUID E | -- | -H | 1 | 0 | 24 |
| FLUID F | -- | -H | 4 | 13 | 7 |
| FLUID G | -- | -H | 4 | 13 | 12 |

QUSO WR55

A hydrophobic precipitated silica having a surface area of 120 square meters per gram obtained from Degussa, Pigments Division, Teterboro, NJ.

Test Method

A defoaming tester similar to that described in United States Patent No. 3,107,519, was used to evaluate the antifoaming efficiency of the compositions of the present invention. In brief, this apparatus was designed to recirculate a foaming liquid from the bottom discharge of a partially filled graduated cylinder, through a magnetically-coupled pump and an in-line aspirator, to the top portion of the graduated cylinder, wherein the circulating liquid was caused to splash onto the free surface of the liquid contained in the cylinder. The temperature of the whole system was controlled at 77° C.

The foaming liquid employed in conjunction with the above apparatus was a "kraft process black liquor" obtained from a wood pulp digestion step in the manufacture of paper. This liquor consisted essentially of sodium lignin sulfonate, pentosan sugars, tall oil soaps, sodium carbonate, sodium sulfide and sodium hydroxide dispersed in water. The liquor had a solids content of about 15% and a pH of 13.5 at 20° C.

In practice, the apparatus was flushed with heated tap water until its temperature had equilibrated at 77 +/-0.1° C., whereupon the system was drained. The cylinder was then filled to a level of 14 cm (400 ml) with the above described foaming liquid which had been preheated to 77° C. When the pump was activated, the liquid level in the cylinder dropped to approximately 11 cm in the cylinder as the foaming liquid filled the pump and lines. Air entrained in the foaming fluid from passing through the aspirator, in addition to the above mentioned splashing action, produced copious foam above the surface of the liquid in the cylinder.

When the total foam height reached a height of 21 cm (i.e., 10 cm of actual foam and 11 cm of liquid), an antifoam composition, in water dispersion form, was injected into the foaming liquid through a rubber tube at the base of the graduated cylinder. Foam height was recorded as a function of time and the "knockdown" and "persistence" characteristics were noted. The knockdown value, which represents the

initial rapid reduction of foam height when the antifoam composition was injected into the foaming liquid, is defined herein as the total foam height at a time of ten seconds after injection. The persistence value, which relates to the antifoam's ability to suppress foaming for a given period of time after injection of the antifoam composition, is defined herein as the time at which the total foam height increased beyond its initial height of 21 cm and maintained a height of greater than 21 cm for more than 2 minutes.

Examples 1 - 3

Antifoam compositions of the present invention were prepared by mixing the components indicated in Table 1 in a 1/2 ounce vial, wherein a microspatula was used to stir the mixture till a homogeneous dispersion was obtained.

Table 1

| Component | Example 1 | Example 2 | Example 3 |
|---|---|---|---|
| Grams of FLUID A | 3.7 | 4.0 | 3.7 |
| Grams of FLUID B | 4.0 | 4.0 | -- |
| Grams of FLUID C | -- | -- | 4.0 |
| Grams of QUSO WR55 | 0.3 | -- | 0.3 |

(Comparative) Example 4

FLUID A was dispersed in deionized water according to the formulation recommended by Aizawa et al. at column 8 of United States Patent No. 4,639,489, cited supra:

| | |
|---|---|
| FLUID A | 10.0 parts |
| Polyoxyethylene Monostearate (PLURONIC L101, BASF, Parsippany, NJ) | 1.4 |
| Fatty Acid Ester of Glycerine (MAZOL GMS K, Mazer Chem. Inc., Gurnee, IL) | 1.2 |
| Hydroxylated Cellulose (NATROSOL 250LR, Hercules, Inc., Wilmington, DE) | 1.5 |
| Antiseptic Agent (Benzoic Acid) | 0.1 |
| Water | Balance |
| Total | 100 Parts |

This composition was prepared by first dispersing the NATROSOL 250LR, MAZOL GMS K and PLURONIC L101 in 38.5 parts of water heated to 70° C. using an Eppenbach mixer. FLUID A was then added and mixed for 30 minutes at 70° C., whereupon the mixture was cooled to 50° C. This combination was further mixed for 30 minutes at 50° C. and the remaining water (47.3 parts) was added. The benzoic acid was finally added and the total antifoam composition cooled under shear to 30° C.

(Comparative) Example 5

An antifoam composition was prepared according to the disclosure of United States Patent No. 4,395,352 to Kulkarni et al., cited supra. This formulation was also prepared in a 1/2 ounce vial using a microspatula to mix the ingredients which consisted of 4.0 grams of FLUID C, 0.3 gram of QUSO WR55 and 3.7 grams of a trimethylsilyl-endblocked polydimethylsiloxane having a viscosity of 20,000 cS at 25° C.

(Comparative) Example 6

The procedures of (Comparative) Example 5 were repeated wherein FLUID B was substituted for FLUID C.

Each of the antifoam compositions of Examples 1 - 6 was diluted with deionized water to form a dispersion having a solids content of approximately 1%, the term "solids" as used herein referring to all silicones, silica and dispersants in a given antifoam composition. This dilution allowed an accurate amount of the antifoam to be introduced into the graduated cylinder by employing a disposable syringe, which amount was adjusted so as to provide an antifoam solids content of 25 ppm (parts per million) in the foaming liquid. Knockdown and persistence results are presented in Table 2.

Table 2

| Example | Knockdown Value (Centimeters) | Persistence Value (Seconds) |
|---|---|---|
| 1 | 13.5 | 1440 |
| 2 | 15.5 | 1620 |
| 3 | 13.5 | 1140 |
| (Comparative Examples) | | |
| 4 | 15.0 | 480 |
| 5 | 22.0 | 0 |
| 6 | 20.0 | 30 |

It can be seen from Table 2 that the compositions of the present invention produced knockdown values at least as good as the comparison antifoams while providing much improved persistence values. Although Example 2 exhibited the best persistence value, this formulation was less desirable than Examples 2 and 3 since it separated into two phases upon standing at room temperature for less than five minutes whereas the latter materials were stable.

Examples 7 - 9

Compositions of the present invention, which additionally contained trimethylsilyl-endblocked polydimethylsiloxane having the viscosities (at 25°C.) indicated in Table 3, were prepared in the manner described above for Examples 1 - 3. These compositions were again diluted in deionized water and tested as above, the results also being shown in Table 3.

Table 3

| Component | Example 7 | Example 8 | Example 9 |
|---|---|---|---|
| Grams of FLUID A | 4.0 | 4.0 | 4.0 |
| Grams of FLUID B | 4.0 | 4.0 | 4.0 |
| Grams of QUSO WR55 | 0.15 | 0.15 | 0.15 |
| Grams 10 cS Polydimethylsiloxane | 0.925 | 1.85 | -- |
| Grams 1,000 cS Polydimethylsiloxane | 0.925 | -- | 1.85 |
| Knockdown Value (Centimeters) | 15.0 | 15.0 | 13.5 |
| Persistence Value (Seconds) | 720 | 840 | 840 |
| Each of these compositions was stable at room temperature and did not phase-separate. | | | |

(Comparative) Examples 10 - 12

In order to further illustrate the advantage of the compositions of the present invention, the silicone defoamer reaction product was combined with two organic glycols (AE 501 and POLYGLYCOL P2000) and

an anionic surfactant (TRITON X-100), as indicated in Table 4. AE 501 (Dow Chemical Co., Midland, MI) is described as a glycol having the average formula $CH_2=CHCH_2(OCH_2CH_2)_{12}OH$. POLYGLYCOL P2000 (Dow Chemical Co., Midland, MI) is described as a polypropylene glycol having a molecular weight of about 2,000. TRITON X-100 (Rohm and Haas, Philadelphia, PA) is described as octylphenoxypolyethoxy(10)-ethanol having an HLB value of 13.5. These compositions also contained trimethylsilyl-endblocked polydimethylsiloxane having the viscosities (at 25 °C.) indicated in Table 4. They were prepared and tested in the manner described above for Examples 7 - 9, the test results being presented in Table 4, wherein Example 7 is again included to highlight the advantages of the compositions of the present invention.

Table 4

| Component | Example | (Comparative) | | Example |
|---|---|---|---|---|
| | 7 | 10 | 11 | 12 |
| Grams of FLUID A | 4.0 | 4.0 | 4.0 | 4.0 |
| Grams of FLUID B | 4.0 | --- | --- | --- |
| Grams of AE 501 | --- | 4.0 | --- | --- |
| Grams of POLYGLYCOL P2000 | --- | --- | 4.0 | --- |
| Grams of TRITON X-100 | --- | --- | --- | 4.0 |
| Grams of QUSO WR55 | 0.15 | 0.15 | 0.15 | 0.15 |
| Grams 10 cS Polydimethylsiloxane | 0.925 | 0.925 | 0.925 | 0.925 |
| Grams 1,000 cS Polydimethylsiloxane | 0.925 | 0.925 | 0.925 | 0.925 |
| Knockdown Value (Centimeters) | 15.0 | * | * | 16.0 |
| Persistence Value (Seconds) | 720 | * | * | 120 |

* Could not be metered in accurately due to poor dispersion.

Examples 13 - 17

A master batch composition was prepared by mixing the following previously described ingredients for one hour using a low shear air stirrer:

| | |
|---|---|
| QUSO WR55 | 10.0 Parts |
| 10 cS Polydimethylsiloxane | 63.3 |
| 1000 cS Polydimethylsiloxane | 63.3 |
| FLUID A | 63.3 |

This master batch was then mixed with an equal weight of each of the silicone glycols appearing in Table 5 and tested as before.

Table 5

| Example | Silicone Glycol Used | Knockdown Value (cm) | Persistence Value (sec.) |
|---|---|---|---|
| 13 | FLUID D | 17.5 | 60 |
| 14 | FLUID E | 18.5 | 30 |
| 15 | FLUID F | 17.5 | 60 |
| 16 | FLUID G | 18.0 | 30 |
| 17 | FLUID B | 16.0 | 120 |

It was observed that the composition of Example 14 was a solid at room temperature indicating that the antifoams of the present invention can be produced in solid form when the number of ethylene oxide units

in the silicone glycol is sufficiently high.

## Claims

1. A composition comprising:

(I) a silicone defoamer reaction product prepared by reacting at a temperature of 50° C. to 300° C.:

(i) 100 parts by weight of at least one polyorganosiloxane selected from the group consisting of

(A) a polyorganosiloxane having a viscosity of about 20 to 100,000 cS at 25° C. and being expressed by the general formula $R^1_aSiO_{(4-a)/2}$ in which $R^1$ is a monovalent hydrocarbon or halogenated hydrocarbon group having 1 to 10 carbon atoms and a has an average value of 1.9 to 2.2 and

(B) a polyorganosiloxane having a viscosity of 200 to about 100 million cS at 25° C. expressed by the general formula $R^2_b(R^3O)_cSiO_{(4-b-c)/2}$ in which $R^2$ is a monovalent hydrocarbon or halogenated hydrocarbon group having 1 to 10 carbon atoms, $R^3$ is hydrogen or a monovalent hydrocarbon group having 1 to 10 carbon atoms, b has an average value of 1.9 to 2.2 and c has a sufficiently large value to give at least one $-OR^3$ group in each molecule, said $-OR^3$ group being present at least at the end of a molecular chain;

(ii) 0.5 to 20 parts by weight of at least one resinous silicon compound selected from the group consisting of

(a) an organosilicon compound of the general formula $R^4_dSiX_{4-d}$ in which $R^4$ is a monovalent hydrocarbon group having 1 to 5 carbon atoms, X is a hydrolyzable group and d has an average value of one or less,

(b) a partially hydrolyzed condensate of said compound (a),

(c) a siloxane resin consisting essentially of $(CH_3)_3SiO_{1/2}$ units and $SiO_{4/2}$ units wherein the ratio of $(CH_3)_3SiO_{1/2}$ units to $SiO_{4/2}$ units is 0.4:1 to 1.2:1, and

(d) a condensate of said compound (c) with said compound (a) or (b);

(iii) 0.5 to 30 parts by weight of a finely divided filler;

(iv) a catalytic amount of a compound for promoting the reaction of the other components; and

(II) from about 20 to 200 parts by weight for each 100 parts by weight of said silicone defoamer reaction product (I) of a silicone-glycol copolymer having the average general formula

$$QR^1_2SiO(R^1\underset{\substack{|\\G}}{S}iO)_j(R^1_2SiO)_kSiR^1_2Q$$

wherein $R^1$ has been previously defined, Q is $R^1$ or G, j has a value of 1 to 20, k has a value of 0 to 200 and G is a polyoxyalkylene group having the average structure

$$-R(OCH_2CH_2)_m(OCH_2\underset{\substack{|\\CH_3}}{CH})_nOZ$$

in which R is a divalent hydrocarbon group having 2 to 20 carbon atoms, m has a value of about 2 to 50, n has a value of 0 to about 50 and Z is selected from the group consisting of hydrogen, an alkyl radical having 1 to 6 carbon atoms and an acyl group having 2 to 6 carbon atoms, said silicone glycol being dispersible in water.

2. The composition according to claim 1, wherein said silicone defoamer reaction product (I) additionally contains up to 20 parts by weight of:

(v) a polyorganosiloxane having a viscosity of 5 to 200 cS at 25° C. and being expressed by the general formula $R^6_e(R^9O)_fSiO_{(4-e-f)/2}$ in which $R^6$ is a monovalent hydrocarbon or halogenated hydrocarbon group having 1 to 10 carbon atoms, $R^9$ is hydrogen or a monovalent hydrocarbon group having 1 to 10 carbon atoms, e is from 1.9 to 2.2 and f has a sufficiently large value to give at least two $-OR^9$ groups in each molecule at the end of a molecular chain.

3. The composition according to claim 2, further comprising from about 1 to 15 parts by weight for each 100 parts by weight of said silicone defoamer reaction product (I) of (III) a finely divided filler.

4. The composition according to claim 3, further comprising from about 10 to 100 parts by weight for each 100 parts by weight of said silicone defoamer reaction product (I) of (IV) at least one polyorganosiloxane selected from the group consisting of a trimethylsilyl-terminated polydimethylsiloxane having a viscosity of about 2 to 100 cS at 25° C. and a trimethylsiloxy-terminated polydimethylsiloxane having a viscosity of about 150 to 100,000 cS at 25° C.

5. In a process of controlling foam in an aqueous foaming system which includes the addition of a foam control agent to said system, the improvement comprising using as the foam control agent the composition of claim 1.